# EUROPÄISCHE PATENTSCHRIFT

(11) **EP 1 182 555 B1**
(45) Veröffentlichungstag und Bekanntmachung des Hinweises auf die Patenterteilung: **29.08.2012**
(21) Anmeldenummer: 01118167.4
(22) Anmeldetag: 26.07.2001
(51) Int. Cl.: G06F 11/26

(54) **Verfahren zum Testen eines Mikrocontrollers durch eine externe Testvorrichtung**
Test method for a microcontroller using an external test device
Procédé de test d'un microcontrolleur à l'aide d'un dispositif de test externe

(30) Priorität: 24.08.2000 DE 10041697
(43) Veröffentlichungstag der Anmeldung: 27.02.2002
(73) Patentinhaber: Infineon Technologies AG, 85579 Neubiberg (DE)
(72) Erfinder: Arnold, Ralf, 85586 Poing (DE); Kock, Ernst-Josef, Dr., 85614 Kirchseeon (DE); Klose, Thorsten, 81737 München (DE)

(56) Entgegenhaltungen:
- EP-A- 0 605 091
- US-A- 5 519 715
- US-A- 6 003 142

## Beschreibung

Die vorliegende Erfindung betrifft ein Verfahren gemäß dem Oberbegriff des Patentanspruchs 1.

Programmgesteuerte Einheiten wie beispielsweise Mikroprozessoren, Mikrocontroller und Signalprozessoren, aber auch andere integrierte Schaltungen enthaltende Bausteine werden üblicherweise nach der Herstellung derselben getestet.

Das Anstoßen oder die Durchführung solcher Tests, und das Auswerten der dabei erhaltenen Testergebnisse erfolgt im allgemeinen durch eine externe Testvorrichtung.

Zum Testen eines Mikrocontrollersdurch eine externe Testvorrichtung existieren mehrere Möglichkeiten.

Eine erste Möglichkeit besteht darin, daß die externe Testvorrichtung
- an die Ein- und/oder Ausgabeanschlüsse des zu testenden Bausteins bestimmte Signale oder Signalfolgen anlegt, durch welche die im Baustein enthaltene Schaltung oder bestimmte Teile derselben stimuliert werden, und
- die sich als Reaktion hierauf an den Ein- und/oder Ausgabeanschlüssen einstellenden Verhältnisse registriert, mit festgelegten Soll-Reaktionen vergleicht, und abhängig vom Vergleichsergebnis festlegt, ob der Baustein fehlerfrei ist oder nicht.

Ein solches Testverfahren weist eine ganze Reihe von Nachteilen auf.

Einer der Nachteile besteht darin, daß es schwierig ist, geeignete Signale oder Signalfolgen, durch die der zu testende Baustein stimuliert wird, und die Soll-Reaktionen hierauf zu ermitteln. Dies erfolgt im allgemeinen unter Verwendung eines Simulationsprogramms, wobei aber zusätzlich berücksichtigt werden muß, daß sich auch Bausteine, die als fehlerfrei einzustufen sind, in gewissem Umfang unterschiedlich verhalten, beispielsweise nicht exakt die selben Signallaufzeiten aufweisen. Sowohl die Simulation des Baustein-Verhaltens als auch die Berücksichtigung zulässiger Toleranzen sind sehr kompliziert und aufwendig.

Ein weiterer Nachteil des oben genannten Testverfahrens besteht darin, daß die externen Testvorrichtungen mitunter nicht so schnell arbeiten können, um den Test bei der maximalen Betriebsfrequenz des zu testenden Bausteins durchführen zu können. Das heißt, daß in Kauf genommen werden muß, daß der Baustein, obgleich er als fehlerfrei eingestuft wurde, in der Praxis doch nicht fehlerfrei arbeitet.

Eine weitere Möglichkeit zum Testen eines Mikrocontrollers Einheit oder eines sonstigen Bausteins durch eine externe Testvorrichtung besteht darin, daß in den Baustein eine Selbsttestvorrichtung integriert wird, durch welche der Baustein einzelne, mehrere oder alle Komponenten selbst testen kann. Solche Selbsttestvorrichtungen sind beispielsweise die sogenannten Built-In-Self-Test- bzw. BIST-Module. Beim Vorhandensein eines BIST-Moduls im zu testenden Baustein kann sich die Aufgabe der externen Testvorrichtung zumindest teilweise auf ein Anstoßen des Tests durch das BIST-Modul und das Auswerten der vom BIST-Modul gelieferten Testergebnisse beschränken. Durch BIST-Module können jedoch nur bestimmte Bausteine oder Baustein-Komponenten wie beispielsweise Speicher-Module getestet werden, so daß zumindest bei Mikrocontrollern nach wie vor die Notwendigkeit besteht, von dem vorstehend beschriebenen ersten Testverfahren Gebrauch zu machen. Unabhängig davon erfordert auch das Vorsehen von BIST-Modulen einen hohen Aufwand. Es handelt sich um eine zusätzlich Hardware-Komponente, durch die die damit ausgestatteten Bausteine größer werden und einen komplizierteren Aufbau aufweisen als Bausteine ohne BIST-Module. Darüber hinaus sind BIST-Module nicht flexibel einsetzbar: Veränderungen des vom BIST-Modul durchgeführten Tests oder Testablaufs können nur durch ein entsprechend verändertes BIST-Modul realisiert werden, was mit einem erheblichen Kosten- und Zeitaufwand verbunden ist.

Eine weitere Möglichkeit zum Testen eines Mikrocontrollers oder eines sonstigen Bausteins durch eine externe Testvorrichtung besteht in der Durchführung eines sogenannten Scan-Tests. Scan-Tests ermöglichen jedoch keinen vollständigen Test; zusätzlich müssen einer oder mehrere der vorstehend erwähnten Tests durchgeführt werden.

Verfahren zum Testen von Mikroprozessoren oder anderen prozessorgesteuerten Einheiten sind beispielsweise aus den Druckschriften US-A-5519715 und WO-A-98/12706 bekannt. Die Druckschrift US-A-5519715 offenbart ein Verfahren bei dem ein Mikroprozessor durch eine JTAG-Scan Controller Card getestet wird. Ein Testprogramm zum Erfassen von Performance-Problemen und Design-Fehlern des Mikroprozessors wird bereitgestellt und vorbereitet. Daten und Befehle werden durch ein Kompilieren erzeugt und in Boundary Scan Vektoren umgesetzt. Die Boundary Scan Vektoren werden zum Laden des Programms von einer JTAG Schnittstelle gelesen und entsprechend den zugeordneten Adressen Bit-für-Bit in Zellen des Boundary Scans geladen. Danach wird das interne Taktsignal des Mikroprozessors abgeschaltet und ein externes Taktsignal angelegt. Die in den Boundary Scan Zellen angelegte Information wird dann in den Daten bzw. Befehls-Cache des Mikroprozessors geladen. Nach dem Laden wird der Mikroprozessor durch eine Übergangssequenz in den normalen Ausführungsmodus versetzt. Die Übergangssequenz umfasst einen Chip-Reset eine Boot-Routine, ein Cache Tag Schreiben und ein Start-Up des Benutzerprogramms, wobei die Caches während der Übergangssequenz deaktiviert verbleiben und die Befehle für die Übergangssequenz von extern über den Boundary Scan geladen werden. Danach wird der Boundary Scan Mode abgeschaltet und ein Fetch der Befehle von den Cache-Speichern durchgeführt, um dieselben von dem Mikroprozessor auszuführen. Während der Ausführung des Programms kann der Status des Ausführungsprogramms von der JTAG-Scan Controller Card überwacht werden, wenn beispielsweise ein Pass oder Fail erzeugt oder Intermediate Daten übertragen werden sollen. Das Überwachen wird über Boundary Scan Shift Operationen durchgeführt, die die Werte an den Pins des Mikroprozessors an den JTAG Controller ausgeben. Ferner können Daten von dem Tester zu dem Mikroprozessor übertragen werden, indem der interne Takt des Mikroprozessors angehalten wird, um den Zustand einzufrieren und danach Daten in den Mikroprozessor zu schreiben. Auch mit diesem Verfahren lassen sich Mikroprozessoren oder anderen prozessorgesteuerten Einheiten nicht unter allen Umständen mit geringem Aufwand schnell und zuverlässig testen.

Der vorliegenden Erfindung liegt daher die Aufgabe zugrunde, das Verfahren derart weiterzubilden, daß sich die damit zu testenden Mikrocontroller unter allen Umständen mit geringem Aufwand schnell und zuverlässig testen lassen.

Diese Aufgabe wird erfindungsgemäß durch die in Patentanspruchs 1 beanspruchten Merkmale gelöst.

Dies erweist sich in mehrfacher Hinsicht als vorteilhaft. Insbesondere
- kann dadurch ein Mikrocontroller durch eine verhältnismäßig einfach aufgebaute externe Testvorrichtung unter realen Bedingungen umfassend getestet werden,
- können dadurch ohne nennenswerten Aufwand zusätzliche oder veränderte Tests an dem Mikrocontroller vorgenommen werden,
- kann dadurch ein Mikrocontroller problemlos durch verschiedene externe Testvorrichtungen getestet werden, und
- kann dadurch eine externe Testvorrichtung problemlos zum Testen verschiedener Mikrocontroller verwendet werden.

Durch das beanspruchte Verfahren können zu testende Mikrocontroller unter allen Umständen mit geringem Aufwand schnell und zuverlässig getestet werden.

Vorteilhafte Weiterbildungen der Erfindung sind den Unteransprüchen, der folgenden Beschreibung und der Figur entnehmbar.

Die Erfindung wird nachfolgend anhand eines Ausführungsbeispiels unter Bezugnahme auf die Figur näher erläutert. Die Figur zeigt einen möglichen Ablauf des Testens des Mikrocontrollers durch das im folgenden beschriebene Verfahren.

Das im folgenden beschriebene Verfahren wird insbesondere eingesetzt, um Mikrocontroller, vor oder unmittelbar nach deren Fertigstellung auf Fehlerfreiheit, genauer gesagt auf Hardware-Fehlerfreiheit zu überprüfen.

Der Test erfolgt üblicherweise, bevor den Mikrocontroller bildende integrierte Schaltung durch Integration in ein Gehäuse bzw. durch Umgießen derselben mit einer ein Gehäuse bildenden Masse zum fertigen Bauteil weiterverarbeitet wird. Vorzugsweise erfolgt der Test bereits zu einem Zeitpunkt, zu dem sich die zu testenden integrierten Schaltungen noch auf dem Wafer befinden, auf welchem sie hergestellt wurden.

Das Verfahren kann aber auch am fertigen Endprodukt und zu beliebigen anderen Zeitpunkten, ja sogar bei bereits im Einsatz befindlichen Mikrocontrollern zum Einsatz kommen.

Das im folgenden beschriebene Verfahren wird als Software Implemented Self Test bzw. SIST bezeichnet. Bei diesem Verfahren wird zwar nach wie vor eine externe Testvorrichtung verwendet, und diese externe Testvorrichtung ist auch wie bisher über Nadeln oder sonstige Kontaktelemente mit ausgewählten oder allen Ein- und/oder Ausgabeanschlüssen (Pads oder Pins) des zu testenden Mikrocontrollers verbunden, doch arbeitet diese externe Testvorrichtung anders als bisher verwendete externe Testvorrichtungen.

Das SIST-Verfahren zeichnet sich dadurch aus, daß die externe Testvorrichtung in dem Mikrocontroller ein das Testen des Mikrocontrollers veranlassendes, durchführendes oder unterstützendes, im folgenden als Testprogramm bezeichnetes Programm zur Ausführung bringt.

Das von den Mikrocontroller auszuführende Testprogramm kann
- bereits bei der Herstellung des Mikrocontrollers in dieser eingestellt werden (beispielsweise durch entsprechende Konfiguration eines in dem Mikrocontroller enthaltenen ROM in diesem hinterlegt werden), oder
- von der externen Testvorrichtung über ein geeignetes Lade-Interface, beispielsweise der sogenannten JTAG-Schnittstelle in einen internen Programmspeicher des Mikrocontrollers geladen werden, wobei der Programmspeicher entweder eine spezieller Testprogrammspeicher oder der "normale" Programmspeicher sein kann, in welchem auch die Anwenderprogramme für den normalen Betrieb des Mikrocontrollers gespeichert werden, und wobei der Programmspeicher wahlweise ein flüchtiger Speicher (z.B. ein RAM) oder ein nichtflüchtiger Speicher (z.B. ein OTP-ROM, ein EPROM, ein EEPROM, oder ein Flash-Speicher) sein kann.

Für den Fall, daß das Testprogramm in einem nichtflüchtigen Speicher (ROM, OTP-ROM, EPROM, EEPROM, Flash-Speicher etc.) des Mikrocontrollers gespeichert ist, erweist es sich als vorteilhaft, wenn dieses bei der Ausführung mindestens ein in einem nichtflüchtigen Speicher gespeichertes Unterprogramm aufruft oder aufrufen kann. Dies eröffnet die Möglichkeit, daß auch ein in einem nichtflüchtigen Speicher gespeichertes Testprogramm korrigiert, modifiziert, oder erweitert werden kann, und daß vorgenommene Korrekturen, Änderungen und Erweiterungen durch ein Umprogrammieren eines das Hauptprogramm oder andere Unterprogramme speichernden nichtflüchtigen Speichers des Mikrocontrollers von dauerhafter Natur sind.

Das Testprogramm wird im betrachteten Beispiel dadurch zur Ausführung gebracht, daß der Mikrocontroller nach der Schaffung der für die Testprogramm-Ausführung notwendigen Voraussetzungen (beispielsweise nach dem Laden des Testprogramms in den Mikrocontroller und/oder nach dem Setzen des Instruction Pointers auf einen vorbestimmten Wert, und/oder nach dem Mappen des das Testprogramm speichernden Speichers auf einen bestimmten Adreß-Bereich) zurückgesetzt wird. Dabei ist darauf zu achten, daß durch das Zurücksetzen des Mikrocontrollers die zuvor für die Ausführung des Testprogramms getroffenen Vorbereitungen nicht rückgängig gemacht werden; gegebenenfalls muß ein spezieller (Test- )Rücksetzvorgang durchgeführt werden.

Was durch die Ausführung des Testprogramms bewirkt wird, hängt von dem Test ab, der durch das Testprogramm veranlaßt, durchgeführt oder unterstützt werden soll.

Eine Möglichkeit besteht darin, daß das Testprogramm den Mikrocontroller "nur" in einen bestimmten Zustand versetzt, in welchem sie sich befinden muß, damit die externe Testvorrichtung bestimmte Tests oder Messungen durchführen kann; eine weitere Möglichkeit besteht darin, daß das Testprogramm einen oder mehrere bestimmte Tests (beispielsweise einen Speicher-Test) selbst durchführt oder veranlaßt.

Es ist zwar nicht zwingend erforderlich, doch erweist es sich als vorteilhaft, wenn das Testprogramm und die externe Testvorrichtung miteinander kommunizieren. Die Kommunikation erfolgt im betrachteten Beispiel
- über bestimmte Ein- und/oder Ausgabeanschlüsse des Mikrocontrollers , wobei diese Ein- und/oder Ausgabeanschlüsse
   - im normalen Betrieb des Mikrocontrollers andere Funktionen innehabende Ein- und/oder Ausgabeanschlüsse sind, also eine durch das Testprogramm definierte Schnittstelle darstellen und zumindest zu den Zeiten, zu welchen das Testprogramm zur Entgegennahme von Daten bereit ist, durch dieses wiederholt abgefragt werden, um zugeführte Daten entgegennehmen zu können, oder
   - auch im normalen Betrieb des Mikrocontrollers eine Schnittstelle (beispielsweise eine SSC-Schnittstelle) bildende Ein- und/oder Ausgabeanschlüsse sind, oder
- über von der externen Testvorrichtung beschreibbare und/- oder auslesbare Register der programmgesteuerten Einheit.

Die dem Mikrocontroller zugeführten Daten und/- oder die vom Programm ausgegebenen Daten werden vorzugsweise über mehrere interne Taktzyklen des Mikrocontrollers und/oder der externen Testvorrichtung stabil gehalten. Dadurch können die Daten vom jeweiligen Empfänger auch dann sicher übernommen werden, wenn die internen Takte des Mikrocontrollers und der externen Testvorrichtung unterschiedliche Frequenzen und/oder unterschiedliche Phasenlagen aufweisen.

Die Kommunikation umfaßt
- eine Mitteilung des Testprogramms an die externe Testvorrichtung, daß es zur Entgegennahme von Daten bereit ist,
- die Zuführung von Daten von der externen Testvorrichtung an das Testprogramm, wobei diese Daten
   - den Ablauf des Testprogramms steuern und damit die vom Testprogramm auszuführenden, zu veranlassenden oder zu unterstützenden Tests und/oder Operationen festlegen, und/oder
   - bei der Ausführung, Veranlassung, oder Unterstützung der durchzuführenden Tests oder Operationen zu berücksichtigende oder zu verwendende Daten sind, und
- Mitteilungen des Testprogramms an die externe Testvorrichtung über den Beginn, den Fortgang, das Ende, und/oder die Ergebnisse der jeweiligen Tests und Operationen.

Es kann auch vorgesehen werden, daß das Testprogramm auch Daten ausgibt, die als Eingangssignale für eine eine Reparatur des Mikrocontrollers durchführende Vorrichtung wie beispielsweise einen Laser Cutter oder eine sonstige Vorrichtung, durch welche fehlerhafte Teile des Mikrocontrollers deaktivierbar und/oder redundante Teile aktivierbar sind, geeignet sind. Eine solche Reparaturvorrichtung kann an dem Mikrocontroller angeschlossen sein und die für sie bestimmten Daten wie die externe Testvorrichtung direkt von dem Mikrokontroller Einheit erhalten ist; die Reparaturvorrichtung kann die zur Reparatur erforderlichen Informationen oder Anweisungen aber auch von der externen Testvorrichtung zugeführt bekommen.

Unabhängig davon kann vorgesehen werden, daß das Testprogramm bei Erkennen eines Fehlers wartet, bis die Reparaturvorrichtung versucht hat, den Fehler zu beheben, und dann überprüft, ob die Reparatur erfolgreich war.

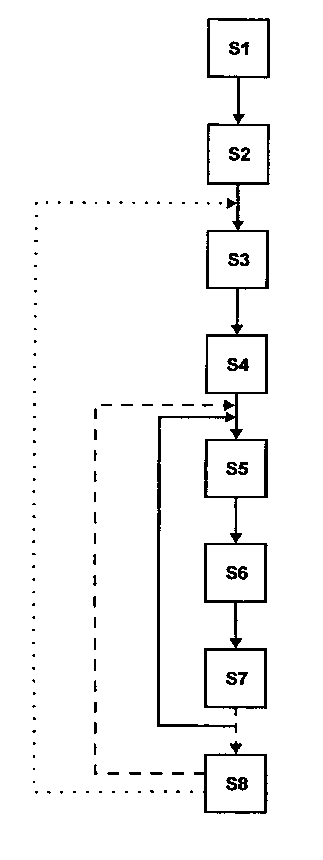

Ein praktisches Ausführungsbeispiel des vorliegend betrachteten Verfahrens zum Testen eines Mikrocontrollers durch eine externe Testvorrichtung ist in Figur 1 veranschaulicht.

Der in der Figur 1 gezeigte Testvorgang beginnt damit, daß die externe Testvorrichtung das Testprogramm oder Teile desselben in den Mikrokontroller Einheit lädt (Schritt S1)

Im nächsten Schritt (Schritt S2) wird der Mikrocontroller Einheit durch Anlegen bestimmter Signale an bestimmte Einund/oder Ausgabeanschlüsse in einen Zustand versetzt, in welchem sich der Mikrocontroller befinden muß, um durch das Testprogramm getestet werden zu können.

Danach wird der Mikrokontroller Einheit durch die externe Testvorrichtung zurückgesetzt, woraufhin (nach der Rücknahme des Rücksetzsignals) der Mikrocontroller mit der Ausführung des Testprogramms beginnt (Schritt S3).

Nach dem Rücksetzen des Mikrocontrollers wartet die externe Testvorrichtung auf eine Meldung des Testprogramms, daß dieses zur Entgegennahme von Anweisungen durch die externe Testvorrichtung bereit ist (Schritt S4). Das durch das Rücksetzen des Mikrocontrollers gestartete Testprogramm initialisiert den Mikrocontroller Einheit zunächst und meldet sodann, daß es zur Entgegennahme von Anweisungen durch die externe Testvorrichtung bereit ist. Diese Meldung besteht aus einem oder mehrere Bits umfassenden Daten, welche das Testprogramm über in diesem selbst oder in Schritt S2 definierte Ein- und/oder Ausgabeanschlüsse des Mikrocontrollers ausgibt ; die externe Testvorrichtung überwacht die betreffenden Ein- und/oder Ausgabeanschlüsse des Mikrocontrollers und überprüft, ob durch die darüber ausgegebenen Daten die Bereitschaft des Testprogramms zur Entgegennahme von Daten signalisiert wird.

Sobald das Testprogramm zur Entgegennahme von Anweisungen bereit ist, geht die Kontrolle des Testvorganges vollständig auf die externe Testvorrichtung über: diese bestimmt fortan, welche Tests durchzuführen sind, und wann und wie dies zu geschehen hat.

Wenn die externe Testvorrichtung feststellt, daß das Testprogramm zur Entgegennahme von Daten bereit ist, übermittelt sie an bestimmte Ein- und/oder Ausgabeanschlüsse des Mikrocontrollers für das Testprogramm bestimmte Daten (Schritt S5). Diese Daten umfassen im betrachteten Beispiel Daten, durch die - über eine entsprechende Steuerung des Ablaufs des Testprogramms - die Tests oder die Operationen bestimmt werden, die das Testprogramm ausführen soll, und gegebenenfalls weitere Daten oder Parameter, unter Verwendung welcher der jeweilige Test oder die jeweilige Operation erfolgen soll. Die Tests bzw. die Operationen, die das Testprogramm ausführen kann, und zu deren Ausführung es von der externen Testvorrichtung angestoßen werden kann, sind im betrachteten Beispiel Tests von verschiedenen internen Speichern, der Test eines A/D-Wandlers, der Test eines CAN-Controllers, der Test eines Instruction Cache, und der Test des Power Management; die zusätzlichen Daten oder Parameter sind beispielsweise vom A/D-Wandler zu wandelnde Analog-Werte, oder Bit-Muster, unter Verwendung welcher ein Speicher-Test durchzuführen ist. Es dürfte einleuchten, daß sich - sofern das Testprogramm hierzu in der Lage ist - auch beliebige andere Tests befehlen lassen, und die zusätzlichen Daten oder Parameter auch beliebige andere Daten oder Parameter sein können. Die Ein- und/oder Ausgabeanschlüsse des Mikrocontrollers, welcher die externe Testvorrichtung die genannten Daten zuführt, sind im Testprogramm oder in Schritt S2 definierte Ein- und/oder Ausgabeanschlüsse. Das Testprogramm fragt diese Anschlüsse zu Zeiten, zu welchen es Eingaben von der externen Testvorrichtung entgegennehmen kann, wiederholt ab (Polling).

Danach (in Schritt S6) führt das Testprogramm den Test oder die Operation aus, zu welchem bzw. welcher es durch die externe Testvorrichtung angewiesen worden ist.

Nach der Ausführung des Tests oder Operation teilt das Testprogramm der externen Testvorrichtung über bestimmte Einund/oder Ausgabeanschlüsse des Mikrocontrollers die erfolgte Ausführung des Tests und/oder das Testergebnis sowie gegebenenfalls nähere Informationen über aufgetretene Fehler (beispielsweise welche Speicherzelle nicht wieder den in sie eingeschriebenen Wert ausgab, und/oder welchen Wert die betreffende Speicherzelle statt dessen ausgab), oder die Ausführung der Operation mit (Schritt S7). Über welche Einund/oder Ausgabeanschlüsse diese Mitteilung erfolgt, wird durch eine entsprechende Festlegung im Testprogramm oder in Schritt S2 bestimmt.

Was nach Schritt S7 passiert, hängt von der Aktion ab, die das Testprogramm auszuführen hatte.

Falls das Testprogramm einen Test auszuführen hatte,
- nimmt die externe Testvorrichtung die Testergebnisse und die gegebenenfalls erhaltenen weiteren Informationen entgegen und wertet diese sofort oder später aus, und
- erfolgt ein Rücksprung auf Schritt S5, wo die externe Testvorrichtung neue Anweisungen für das Testprogramm ausgibt (die in Schritt 7 an die externe Testvorrichtung ausgegebenen Informationen sind für die externe Testvorrichtung zugleich ein Hinweis darauf, daß das Testprogramm zur Entgegennahme neuer Anweisungen bereit ist).

Falls das Testprogramm den Mikrocontroller "nur" in einen bestimmten Zustand versetzen sollte,
- kann die externe Testvorrichtung im Anschluß an Schritt S7 in einem Schritt S8 die Tests durchführen, die in diesem Zustand durchgeführt werden müssen (beispielsweise kann die externe Testvorrichtung nun den Strom messen, welchen der Mikrocontroller aufnimmt, nachdem diese durch das Testprogramm in eine Energiesparbetriebsart, beispielsweise in den sogenannten Sleep-Mode oder in den sogenannten Power-Down-Mode versetzt wurde), und
- erfolgt - gegebenenfalls nach einer Zurückversetzung des Mikrocontrollers in den vorherigen Zustand - anschließend ein Rücksprung auf Schritt S5, wo der Mikrocontroller neue Anweisungen für das Testprogramm ausgibt, oder
- erfolgt, wenn eine Zurückversetzung des Mikrocontrollers in den vorherigen Zustand nicht mehr oder nicht mehr ohne weiteres möglich ist, anschließend ein Rücksprung auf Schritt S3, wodurch der Mikrocontroller zurückgesetzt und das Testprogramm neu gestartet wird.

Der in der Figur 1 dargestellte Testablauf ist nur eine von vielen Möglichkeiten zum Testen eines Mikrocontrollers nach dem SIST-Verfahren. Einige der möglichen Abwandlungen oder Alternativen wurden vorstehend bereits erwähnt; es dürfte einleuchten, daß nahezu unbegrenzt viele weitere Abwandlungen oder Alternativen möglich sind.

Je nach der Art der durchzuführenden Tests oder Operationen kann es erforderlich oder nützlich sein, in den Mikrocontroller spezielle, durch das Testprogramm aktivierbare Module zu integrieren, die den Testablauf beschleunigen oder unterstützen. Hierzu zählt zum Beispiel ein Modul, das die Adressierung eines zu testenden Speichers entsprechend einer internen Adreßzuordnung modifiziert oder bestimmte Bitmuster (z.B. für Checkerboard-Tests erforderliche Bitmuster) generiert und zum Beschreiben des zu testenden Speichers verwendet.

Durch das beschriebene Verfahren können Mikrocontroller nach alledem unter allen Umständen mit minimalem Aufwand schnell und zuverlässig getestet werden.

Das Testprogramm kann auch zum Betreiben des Mikrocontrollers während des sogenannten Burn-In, und/oder oder während Lebensdauer-Tests verwendet werden. In diesem Fall wird das Testprogramm vorzugsweise dazu veranlaßt, die von ihm veranlaßbaren, durchführbaren oder unterstützbaren Tests oder Operationen zumindest teilweise in einer festgelegten oder zufälligen Reihenfolge zu wiederholen.

### Bezugszeichenliste

- S1: Verfahrensschritt, in welchem die externe Testvorrichtung das Testprogramm oder Teile desselben in den Mikrocontroller lädt
- S2: Verfahrensschritt, in welchem die externe Testvorrichtung den Mikrocontroller zur Ausführung des Testprogramms vorbereitet
- S3: Verfahrensschritt, in welchem die externe Testvorrichtung den Mikrocontroller zurücksetzt und dadurch das Testprogramm startet,
- S4: Verfahrensschritt, im welchem das Testprogramm den Mikrocontroller initialisiert, und die externe Testvorrichtung auf die Mitteilung des Testprogramms wartet, daß dieses zur Entgegennahme von Daten von der externen Testvorrichtung bereit ist,
- S5: Verfahrensschritt, in welchem die externe Testvorrichtung Daten an das Testprogramm überträgt,
- S6: Verfahrensschritt, in welchem das Testprogramm einen von der externen Testvorrichtung gewünschten Test oder eine von der externen Testvorrichtung gewünschte Operation ausführt,
- S7: Verfahrensschritt, in welchem das Testprogramm den ausgeführten Test oder die ausgeführte Operation betreffende Daten ausgibt,
- S8: Verfahrensschritt, in welchem die externe Testvorrichtung selbst einen Test an dem Mikrocontroller durchführt

## Patentansprüche

1. Verfahren zum Testen eines Mikrocontrollers durch eine externe Testvorrichtung, wobei die externe Testvorrtchtung in dem Mikrocontroller ein das Testen des Mikrocontrollers veranlassendes, durchführendes oder unterstützendes Programm zur Ausführung bringt, wobei die externe Testvorrichtung und das Programm miteinander kommunizieren (S4,S5,S7), das Testen einen Test eines A/D Wandlers, einen Test eines CAN Controllers oder einen Test eines Powermanagements umfaßt, wobei die Kommunikation über bestimmte Ein-und/oder Ausgabeanschlüsse des Mikrocontrollers erfotgt, und dass das Programm zumindest zu den Zeiten, zu welchen es zur Entgegennahme von Daten bereit ist, die Ein- und/oder Ausgabeanschlüsse, über welche ihr Daten zugeführt werden können, wiederholt abfragt (S9), um diesen zugeführte Daten entgegenzunehmen, wobei die externe Testvorrichtung durch dem Mikrocontroller zugeführte Daten den Ablauf des Programms steuert (55), wobei durch die Steuerung des Ablaufs des Programms bestimmt wird, welche Tests das Programm veranlasst, durchführt oder unterstützt, wobei in den Mikrocontroller integrierte spezielle, durch das Programm aktivierbare Module integriert sind, die einen Testablauf beschleunigen oder unterstützen.

2. Verfahren nach Anspruch 1,
**dadurch gekennzeichnet,**
**daß** das Testen des Mikrocontrollers zur Überprüfung des Mikrocontrollers auf Hardware-Fehler durchgeführt wird.

3. Verfahren nach Anspruch 1 oder 2,
**dadurch gekennzeichnet,**
**daß** das Testen während oder unmittelbar nach der Herstellung des Mikrocontrollers durchgeführt wird.

4. Verfahren nach einem der vorhergehenden Ansprüche,
**dadurch gekennzeichnet,**
**daß** das Programm oder Teile desselben von der externen Test- vorrichtung in den Mikrocontroller geladen wird (S1).

5. Verfahren nach einem der vorhergehenden Ansprüche,
**dadurch gekennzeichnet,**
**daß** das Programm oder Teile desselben bei der Herstellung des Mikrocontrollers in einem nichtflüchtigen Speicher derselben hinterlegt wird.

6. Verfahren nach Anspruch 5,
**dadurch gekennzeichnet,**
**daß** das Programm mindestens ein in einem nichtflüchtigen Speicher gespeichertes Unterprogramm aufruft.

7. Verfahren nach einem der vorhergehenden Ansprüche,
**dadurch gekennzeichnet**
**daß** das Programm durch ein Rücksetzen des Mikrocontrollers gestartet wird (S2).

8. Verfahren nach einem der vorhergehenden Ansprüche,
**dadurch gekennzeichnet**
**daß** die Ein- und/oder Ausgabeanschlüsse des Mikrocontrollers , über welche die Kommunikation erfolgt, im normalen Betrieb des Mikrocontrollers andere Funktionen innehabende Ein- und/oder Ausgabeanschlüsse sind.

9. Verfahren nach einem der vorhergehenden Ansprüche,
**dadurch gekennzeichnet,**
**daß** die Kommunikation über im normalen Betrieb des Mikrocontrollers eine Schnittstelle bildende Ein- und/oder Ausgabeanschlüsse erfolgt.

10. Verfahren nach einem der vorhergehenden Ansprüche,
**dadurch gekennzeichnet,**
**daß** die den Ein- und/oder Ausgabeanschlüssen des Mikrocontrollers zugeführten Daten, und/oder die aus den Ein- und/oder Ausgabeanschlüssen des Mikrocontrollers ausgegebenen Daten über mehrere interne Taktzyklen des Mikrocontrollers und/oder der externen Testvorrichtung stabil gehalten werden.

11. Verfahren nach einem der vorhergehenden Ansprüche,
**dadurch gekennzeichnet,**
**daß** die Kommunikation über von der externen Testvorrichtung beschreibbare und/oder auslesbare Register des Mikrocontrollers erfolgt.

12. Verfahren nach einem der vorhergehenden Ansprüche,
**dadurch gekennzeichnet,**
**daß** das Programm in Abhängigkeit von Daten arbeitet, welche die externe Testvorrichtung dem Mikrocontroller zuführt (S5).

13. Verfahren nach einem der vorhergehenden Ansprüche,
**dadurch gekennzeichnet,**
**daß** das Programm durch Ausgabe entsprechender Daten aus des Mikrocontroller signalisiert, daß sie zur Entgegennahme von Daten bereit ist (S4).

14. Verfahren nach einem der vorhergehenden Ansprüche,
**dadurch gekennzeichnet,**
**daß** die Veranlassung, Durchführung, oder Unterstützung des Tests unter Verwendung oder Berücksichtigung zusätzlicher Daten erfolgt, die die externe Test- vorrichtung dem Mikrocontroller zuführt (S5).

15. Verfahren nach einem der vorhergehenden Ansprüche,
**dadurch gekennzeichnet,**
**daß** das Programm die Ausführung und/oder das Ergebnis der Tests betreffende Daten an die externe Testvorrichtung ausgibt oder zur Abholung durch die externe Testvorrichtung bereitstellt (S7).

16. Verfahren nach einem der vorhergehenden Ansprüche,
**dadurch gekennzeichnet,**
**daß** das Programm Daten ausgibt, die als Eingangssignale für eine eine Reparatur des Mikrocontrollers durchführende Vorrichtung geeignet sind, wobei die die Reparatur durchführende Vorrichtung ein Laser Cutter oder eine sonstige Vorrichtung ist, durch welche fehlerhafte Teile des Mikrocontrollers deaktivierbar und/oder redundante Teile aktivierbar sind.

17. Verfahren nach Anspruch 16,
**dadurch gekennzeichnet,**
**daß** das Programm die Daten direkt an die die Reparatur durchführende Vorrichtung ausgibt.

18. Verfahren nach Anspruch 16, oder 17,
**dadurch gekennzeichnet,**
**daß** das Programm die Durchführung der Reparatur abwartet und dann überprüft, ob die Reparatur erfolgreich war.

19. Verfahren nach einem der vorhergehenden Ansprüche,
**dadurch gekennzeichnet,**
**daß** das Programm den Ablauf eines Tests beschleunigende oder unterstützende Bestandteile des Mikrocontrollers aktivieren kann, wobei die den Ablauf eines Tests beschleunigenden oder unterstützenden Bestandteile des Mikrocontrollers Modul umfassen, das die Adressierung eines zu testenden Speichers entsprechend einer internen Adreßzuordnung modifiziert oder beispielsweise für Checkerboard-Tests erforderliche Bitmuster generiert und zum Beschreiben des zu testenden Speichers verwendet.

20. Verfahren nach einem der vorhergehenden Ansprüche,
**dadurch gekennzeichnet,**
**daß** die vom Programm veranlaßbaren, durchführbaren oder unterstützbaren Tests zumindest teilweise in einer festgelegten oder zufälligen Reihenfolge wiederholt werden.

## Claims

1. Test method for a microcontroller using an external test device, wherein the external test device causes a program initiating, performing or supporting the testing of the microcontroller to be executed in the microcontroller, wherein the external test device and the program communicate with one another (S4, S5, S7), the testing comprises a test of an A/D converter, a test of a CAN controller or a test of power management, wherein the communication takes place via certain input and/or output terminals of the microcontroller, and the program repeatedly polls (S9) the input and/or output terminals by which it can be supplied with data, at least at the times at which it is ready to receive data, in order to receive data supplied to them, wherein the external test device controls the sequence of the program (S5) using data supplied to the microcontroller, wherein the control of the sequence of the program determines which tests are initiated, performed or supported by the program, wherein special modules, which can be activated by the program, integrated in the microcontroller are integrated which accelerate or support a test sequence.

2. Method according to Claim 1, **characterized in that** the testing of the microcontroller is performed for checking the microcontroller for hardware faults.

3. Method according to Claim 1 or 2, **characterized in that** the testing is performed during or immediately after the manufacture of the microcontroller.

4. Method according to one of the preceding claims, **characterized in that** the program or parts thereof is/are loaded (S1) into the microcontroller by the external test device.

5. Method according to one of the preceding claims, **characterized in that** the program or parts thereof is/are stored during the manufacture of the microcontroller in a non-volatile memory thereof.

6. Method according to Claim 5, **characterized in that** the program calls up at least one subprogram stored in a non-volatile memory.

7. Method according to one of the preceding claims, **characterized in that** the program is started (S2) by resetting the microcontroller.

8. Method according to one of the preceding claims, **characterized in that** the input and/or output terminals of the microcontroller, via which the communication takes place, are input and/or output terminals having other functions in normal operation of the microcontroller.

9. Method according to one of the preceding claims, **characterized in that** the communication takes place via input and/or output terminals forming an interface in normal operation of the microcontroller.

10. Method according to one of the preceding claims, **characterized in that** the data supplied to the input and/or output terminals of the microcontroller and/or the data output from the input and/or output terminals of the microcontroller are kept stable over a number of internal clock cycles of the microcontroller and/or of the external test device.

11. Method according to one of the preceding claims, **characterized in that** the communication takes place via registers of the microcontroller which can be written to and/or read from by the external test device.

12. Method according to one of the preceding claims, **characterized in that** the program operates in dependence on data which the external test device supplies (S5) to the microcontroller.

13. Method according to one of the preceding claims, **characterized in that** the program signals by outputting corresponding data from the microcontroller that it is ready (S4) to receive data.

14. Method according to one of the preceding claims, **characterized in that** the initiation, performance or support of the test takes place by using or taking into consideration additional data which are supplied to the microcontroller by the external test device (S5).

15. Method according to one of the preceding claims, **characterized in that** the program outputs data relating to the execution and/or the result of the tests to the external test device or provides these data to be fetched by the external test device (S7).

16. Method according to one of the preceding claims, **characterized in that** the program outputs data which are suitable as input signals for a device performing a repair of the microcontroller, wherein the device performing the repair is a laser cutter or any other device by means of which faulty parts of the microcontroller can be deactivated and/or redundant parts can be activated.

17. Method according to Claim 16, **characterized in that** the program outputs the data directly to the device performing the repair.

18. Method according to Claim 16 or 17, **characterized in that** the program waits for the completion of the repair and then checks whether the repair was successful.

19. Method according to one of the preceding claims, **characterized in that** the program can activate components of the microcontroller which accelerate or support the sequence of a test, wherein the components of the microcontroller which accelerate or support the sequence of a test comprise a module which modifies the addressing of a memory to be tested in accordance with an internal address allocation or, for example, generates, and uses for describing the memory to be tested, bit patterns as required for checkerboard tests.

20. Method according to one of the preceding claims, **characterized in that** the tests, which can be initiated, performed or supported by the program, are at least partially repeated in a fixed or random order.

## Revendications

1. Procédé de test d'un microcontrôleur par un dispositif de test extérieur, le dispositif de test extérieur faisant réaliser dans le microcontrôleur un programme provoquant, effectuant ou assistant le test du microcontrôleur, le dispositif extérieur de test et le programme communiquant entre eux, le test comprenant un test d'un convertisseur A/N, un test d'un contrôleur CAN ou un test d'une gestion de puissance, la communication s'effectuant par des bornes d'entrée et/ou de sortie déterminées du microcontrôleur et en ce que le programme (S9) interroge de manière répétée, au moins aux temps auxquels il est prêt à recevoir des données, les bornes d'entrée et/ou de sortie par lesquelles ces données peuvent être amenées pour recevoir ces données amenées, le dispositif extérieur de test commandant le déroulement du programme par les données envoyées au microcontrôleur, dans lequel, par la commande du déroulement du programme, il est déterminé les tests que le programme provoque, effectue ou assiste, dans lequel des modules intégrés spéciaux activables par le programme et qui accélèrent ou assistent un déroulement de test sont intégrés dans le microcontrôleur.

2. Procédé suivant la revendication 1,
**caractérisé**
**en ce que** l'on effectue le test du microcontrôleur pour contrôler un défaut du matériel du microcontrôleur.

3. Procédé suivant la revendication 1 ou 2,
**caractérisé**
**en ce que** l'on effectue le test pendant ou immédiatement après la fabrication du microcontrôleur.

4. Procédé suivant l'une des revendications précédentes,
**caractérisé**
**en ce que** l'on charge (S1) le programme ou des parties de celui-ci dans le microcontrôleur par le dispositif extérieur de test.

5. Procédé suivant l'une des revendications précédentes,
**caractérisé**
**en ce que** l'on mémorise dans une mémoire non volatile du microcontrôleur le programme ou des parties de celui-ci lors de la fabrication du microcontrôleur.

6. Procédé suivant la revendication 5,
**caractérisé**
**en ce que** l'on appelle le programme au moyen d'un sous-programme mémorisé dans une mémoire non volatile.

7. Procédé suivant l'une des revendications précédentes,
**caractérisé**
**en ce que** l'on fait débuter (S2) le programme par une remise à l'état initial du microcontrôleur.

8. Procédé suivant l'une des revendications précédentes,
**caractérisé**
**en ce que** les bornes d'entrée et/ou de sortie du microcontrôleur, par lesquelles s'effectue la communication, sont, en fonctionnement normal du microcontrôleur, des bornes d'entrée et/ou de sortie possédant d'autres fonctions.

9. Procédé suivant l'une des revendications précédentes,
**caractérisé**
**en ce que** la communication s'effectue par des bornes d'entrée et/ou de sortie formant une interface dans le fonctionnement normal du microcontrôleur.

10. Procédé suivant l'une des revendications précédentes,
**caractérisé**
**en ce que** les données envoyées aux bornes d'entrée et/ou de sortie du microcontrôleur et/ou les données émises par les bornes d'entrée et/ou de sortie du microcontrôleur sont conservées d'une manière stable sur plusieurs cycles de cadencement interne du microcontrôleur et/ou du dispositif extérieur de test.

11. Procédé suivant l'une des revendications précédentes,
**caractérisé**
**en ce que** la communication s'effectue par un registre du microcontrôleur, qui peut être lu par le dispositif extérieur de test ou dans lequel le dispositif extérieur peut écrire.

12. Procédé suivant l'une des revendications précédentes,
**caractérisé**
**en ce que** le programme travaille en fonction de données que le dispositif extérieur de test envoient (S5) au microcontrôleur.

13. Procédé suivant l'une des revendications précédentes,
**caractérisé**
**en ce que** le programme signale par envoi de données correspondantes à partir du microcontrôleur qu'il est prêt (S4) à recevoir des données.

14. Procédé suivant l'une des revendications précédentes,
**caractérisé**
**en ce que** l'on provoque, l'on effectue ou l'on assiste le test en utilisant ou en tenant compte de données supplémentaires que le dispositif extérieur de test envoie (S5) au microcontrôleur.

15. Procédé suivant l'une des revendications précédentes,
**caractérisé**
**en ce que** le programme émet vers le dispositif extérieur de test des données concernant l'exécution et/ou le résultat du test ou les met à disposition (S7) pour que le dispositif extérieur de test aille les chercher.

16. Procédé suivant l'une des revendications précédentes,
**caractérisé**
**en ce que** le programme émet des données, qui sont appropriées comme signaux d'entrée pour un dispositif effectuant une réparation du microcontrôleur, le dispositif effectuant une réparation étant un cutter laser ou un dispositif autre, par lequel des parties défectueuses du microcontrôleur peuvent être désactivées et/ou des parties redondantes peuvent être activées.

17. suivant la revendication 16,
**caractérisé**
**en ce que** le programme émet des données directement vers le dispositif effectuant la réparation.

18. suivant la revendication 16 ou 17,
**caractérisé**
**en ce que** le programme attend la réparation et contrôle si la réparation a été bien effectuée.

19. Procédé suivant l'une des revendications précédentes,
**caractérisé**
**en ce que** le programme peut activer des composants du microcontrôleur accélérant ou assistant le déroulement d'un test, les composants du microcontrôleur accélérant ou assistant le déroulement d'un test comprenant un module, qui modifie l'adresse d'une mémoire à tester correspondant à une association interne d'adresse ou produisant, par exemple, des modèles de bit nécessaires pour des tests checkerboard et l'utilise pour écrire dans la mémoire à tester.

20. Procédé suivant l'une des revendications précédentes,
**caractérisé**
**en ce que** les tests qui peuvent être provoqués, qui peuvent être effectués ou qui peuvent être assistés par le programme sont répétés, au moins en partie, dans un ordre fixe ou aléatoire.
